# EUROPÄISCHE PATENTSCHRIFT

(11) **EP 0 650 685 B1**
(45) Veröffentlichungstag und Bekanntmachung des Hinweises auf die Patenterteilung: **10.06.1998**
(21) Anmeldenummer: 94114125.1
(22) Anmeldetag: 08.09.1994
(51) Int. Cl.: A47J 45/06, F16B 21/12

(54) **Vorrichtung zum Montieren eines Griffes an einem Pfannenkörper**
Device for mounting a handle on a pan
Dispositif pour le montage d'une poignée sur une casserole

(30) Priorität: 28.10.1993 CH 3272/93
(43) Veröffentlichungstag der Anmeldung: 03.05.1995
(73) Patentinhaber: A. + J. Stöckli AG, 8754 Netstal (CH)
(72) Erfinder: Marti, Hans-Rudolf, CH-8750 Glarus (CH)
(74) Vertreter: Blum, Rudolf Emil Ernst

(56) Entgegenhaltungen:
- FR-A- 2 383 638

## Beschreibung

Die Erfindung betrifft eine Vorrichtung zum Montieren eines Griffes an einem Pfannenkörper, mit einem Anbindungsstück, das dazu bestimmt ist, unlösbar an der Mantelfläche des Pfannenkörpers befestigt zu sein, und mit einem Hülsenabschnitt des Griffes, welcher Hülsenabschnitt über das Anbindungsstück gestülpt ist, und mit einer Befestigungseinrichtung zum Befestigen des Griffes am Anbindungsstück, wobei das Anbindungsstück einen sich in Richtung des Griffes erstreckenden Zapfen mit einer Querbohrung aufweist.

Eine solche Vorrichtung ist durch die FR-A-283 638 bekannt. Der Hülsenabschnitt des Griffes ist mit einer Queröffnung versehen, und eine als Zapfen ausgebildete Befestigungseinrichtung ragt durch die Queröffnung des Griffes und durch die Querbohrung des Zapfens vom Anbindungsstück. Im Laufe der Zeit wird durch die Handhabung der aus Pfannenkörper und Griff bestehenden Pfanne die Lochleibung von Queröffnung und Querbohrung ausgeweitet und es ist keine starre, spielfreie Halterung des Griffes mehr am Pfannenkörper gewährleistet, so dass der Griff am Pfannenkörper "wackelt". Dies soll mit der erfindungsgemässen Vorrichtung vermieden werden.

Es ist auch noch eine andere Vorrichtung bekannt, bei der das Anbindungsstück mit einem Innengewinde versehen und der Griff in seiner Längenerstreckung von einer Durchgangsbohrung durchsetzt ist. Zum Befestigen des Griffes am Anbindungsstück dient eine sehr lange Schraube, die den Griff durchsetzt, wobei der Schraubenkopf am Griff abgestützt ist und die Schraube in das Innengewinde des Anbindungsstückes eingeschraubt wird. Diese Befestigungsart ist nicht sehr stabil, da sich die sehr lange Schraube im Laufe der Zeit lockert und deshalb immer wieder angezogen werden muss. Oftmals kommt noch hinzu, dass im Laufe der Zeit bei etwas lockerer Schraube die Gewindegänge verrosten, so dass dann die Schraube gar nicht mehr festgezogen werden kann. Weiterhin hängt die Andrückkraft des Griffes am Pfannenkörper alleine von der Festziehkraft der Schraube ab, so dass bei mehrmaligem und sehr starken Festziehen der Schraube oft noch der Schraubenkopf beschädigt wird.

Es wird die Schaffung einer Vorrichtung bezweckt, mit der die vorerwähnten Nachteile vermieden werden können. Die erfindungsgemässe Vorrichtung ist dadurch gekennzeichnet, dass der Hülsenabschnitt eine gewölbte Querwand aufweist, die mit einer Durchbrechung auf dem Zapfen derart sitzt, dass bei montiertem Griff die Querwand benachbart der Querbohrung liegt, und mit einem Querstift der bei montiertem Griff in der Querbohrung sitzt und in Anlage mit der konkaven Krümmung der gewölbten Querwand ist.

Die abhängigen Ansprüche definieren verschiedene Ausführungsformen der Vorrichtung gemäß Anspruch 1. In der Zeichnung ist ein Ausführungsbeispiel und eine Variante des Erfindungsgegenstandes dargestellt.
Es zeigen:
Figur 1 einen Vertikalschnitt durch die Vorrichtung bei einer auf einer Unterlage abgestellten Pfanne,
Figur 2 ein Anbindungsstück der Vorrichtung in schaubildlicher Darstellung,
Figur 3 eine gewölbte Querwand der Vorrichtung in schaubildlicher Darstellung, und
Figur 4 eine andere Ausführungsform des Details A in Figur 1.

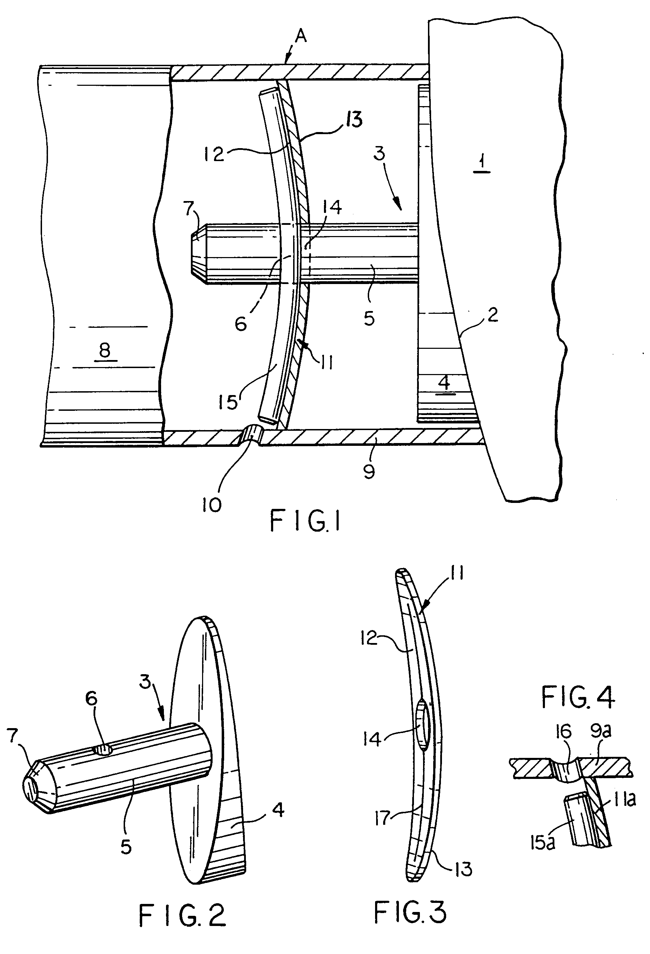

Der Pfannenkörper 1 hat beim gezeigten Beispiel eine nach unten gewölbte Aussenkontur 2. Da der Pfannenkörper 1 meistens rund ist, ist noch eine weitere, nicht ersichtliche periphere Wölbung am Pfannenkörper 1 vorhanden. Sowohl an diese periphere Wölbung als auch an die Kontur 2 ist ein Anbindungsstück 3 mit seiner Querplatte 4 angepasst und angeschweisst. Das Anbindungstück 3 hat weiterhin einen Zapfen 5, der einstückig ist mit der Querplatte 4 und von dieser abragt. Der Zapfen 5 ist mit einer Querbohrung 6 versehen und weist an seinem freien Ende eine Abfasung 7 auf (Figur 2). Dieses aus Figur 2 ersichtliche Anbindungsstück 3 ist also unlösbar an der Mantelfläche des Pfannenkörpers 1 befestigt.

Ein Griff 8 ist mit einem Hülsenabschnitt 9 versehen, der z.B. aus Blech besteht und wobei die Querschnittsfläche verschiedene Form haben kann, z.B. rechteckig, kreisförmig oder elliptisch. Weiterhin kann der Hülsenabschnitt 9 verschieden gebildet werden; er kann ein geschlossenes Rohr sein, er kann aber auch nicht geschlossen sein, so dass der Hülsenabschnitt unten geschlitzt ist. Der Hülsenabschnitt 9 ist mit zumindest einer Queröffnung 10 versehen. Im Hülsenabschnitt 9 ist eine gewölbte Querwand 11 befestigt, z.B. eingeschweisst (lasergeschweisst). Bei auf einer Unterlage abgestelltem Pfannenkörper nach Figur 1 verläuft beim gezeigten Beispiel die Wölbung der Querwand 11 in der Vertikalen. Die Querwand 11 hat somit eine konkave Krümmung 12 und eine konvexe Krümmung 13. Die Querwand 11 ist mit einer Durchbrechung 14 versehen.

Beim gezeigten Beispiel ist die Querplatte 4 des Anbindungsstückes 3 oval, also ellipsenförmig (Figur 2), so dass dann auch der Hülsenabschnitt 9 ellipsenförmig ist, so dass er mit einer vorderen Stirnfläche über die Querplatte 4 gestülpt werden kann und an der Mantelfläche 2 des Pfannenkörpers anliegt (Figur 1). Der ellipsenförmige Hülsenabschnitt ist dann auch mit einer ellipsenförmigen Querwand 11 versehen (Figur 3).

Die Befestigungsvorrichtung zum Befestigen des Griffes am Pfannenkörper besteht aus einem Querstift 15, der z.B. aus Stahl ist, aber auch aus einem Kunststoffmaterial bestehen könnte. Weiterhin kann der Querstift 15 als Federstab wirken, so dass er also federelastisch gekrümmt werden kann. Im Ruhezustand ist der Querstift 15 gerade.

Das Montieren des Griffes 8 am Pfannenkörper 1 erfolgt folgendermassen:

Der Griff 8 wird mit seinem Hülsenabschnitt 9 und seiner Querwand 11 auf den Zapfen 5 aufgesteckt, wobei also der Zapfen 5 durch die Durchbrechung 14 ragt, und dann wird der Hülsenabschnitt 9 über die Querplatte 4 gestülpt und liegt an der Mantelfläche 2 des Pfannenkörpers 1 an. Nunmehr wird der gerade Querstift 15 durch die Queröffnung 10 mit einem Werkzeug in die Querbohrung 6 des Zapfens 5 eingetrieben. Hierbei liegt der Querstift 6 mehr oder weniger an der konkaven Krümmung 12 der Querwand 11 an und wird in seine aus Figur 1 ersichtliche gekrümmte Lage gezwängt. Da die Queröffnung 10 gemäss Figur 1 etwas versetzt zum Längenverlauf des montierten Querstiftes 15 liegt, schnappt also der Querstift 15 im fertig montierten Zustand an die Querwand 11, 11a und liegt somit geschützt innerhalb des Hülsenabschnittes 9, und kann nicht ohne weiteres aus diesem wieder entfernt werden. Der Griff 8 ist nunmehr spielfrei am Pfannenkörper 1 befestigt. Wünscht man, dass der Griff 8 leicht wieder vom Pfannenkörper 1 gelöst werden kann, so kann das in Figur 1 gezeigte Detail A gemäss Figur 4 gestaltet werden. Der Hülsenabschnitt 9a ist dann mit einer Queröffnung 16 versehen, die im Längenverlauf des Querstiftes 15a liegt, so dass mit einem über die andere Queröffnung 10 eingeführten Werkzeug der an der Querwand 11a anliegende Querstift 15a vom Innern des Hülsenabschnittes 9a nach aussen getrieben und dann entnommen werden kann, zum Lösen des Griffes 8 vom Pfannenkörper 1.

Aus Figur 3 ist ersichtlich, dass bei der elliptischen Querwand 11 der Wölbungsverlauf in der grossen Achse der Ellipse liegt. Aus Figur 1 ist ersichtlich, dass die Querwand 11 unmittelbar benachbart der Querbohrung 6 liegt. Dies muss nicht immer genau der Fall sein, d.h. durch die vorhandenen Fertigungstoleranzen könnte die Querwand auch in einem geringen Abstand zur Querbohrung 6 liegen. Der Querstift 15 wird dann weniger gebogen, liegt aber immer noch federelastisch an der Querwand 11 an. Durch die federelastische Anlage des Querstiftes 15 an der Querwand 11 wird also immer der Griff mit seinem Hülsenabschnitt 9 federelastisch an den Pfannenkörper 1 angedrückt.

Beim dargestellten Ausführungsbeispiel ist die konvexe Krümmung 13 der Querwand 11 dem Pfannenkörper 1 zugewandt.

Beim in Figur 1 gezeigten Beispiel erfolgt also die Befestigung des Griffes am Pfannenkörper dadurch, dass der im Zapfen 5 sitzende Querstift 15 federelastisch über die Querwand 11 den Griff über den Hülsenabschnitt 9 an den Pfannenkörper 1 federelastisch andrückt. Die gleiche federelastische Befestigung könnte bei einem anderen Ausführungsbeispiel auch so erfolgen, dass der Hülsenabschnitt mit einem hakenförmigen Ende in Ausnehmungen der Querplatte 4 eingehängt werden würde und mittels des Querstiftes 15 eine Zugkraft am Hülsenabschnitt 9 ausgeübt wird. In diesem Fall wird die Querwand 11 so im Hülsenabschnitt 9 befestigt, dass ihre konkave Krümmung 12 der Querplatte 4 zugewandt ist und der Querstift 15 zwischen Querplatte 4 und Querwand 11 zu liegen kommt. Bei dieser Konstruktion würde dann der Federstift 15 die Hülse 9 in Figur 1 nach links drücken.

Die Querwand 11 kann mit einer Rinne 17 versehen sein, in der der Querstift 15 beim Eintreiben in die in Figur 1 gezeigte Stellung geführt rutschen kann.

Der Querstift 15 kann z.B. eine runde oder rechteckige Querschnittsfläche haben. Die Querbohrung 6 im Zapfen 5 weist dieselbe Querschnittsfläche wie der Querstift 15 auf.

## Patentansprüche

1. Vorrichtung zum Montieren eines Griffes (8) an einem Pfannenkörper (1), mit einem Anbindungsstück (3), das dazu bestimmt ist, unlösbar an der Mantelfläche (2) des Pfannenkörpers (1) befestigt zu sein, und mit einem Hülsenabschnitt (9) des Griffes (8), welcher Hülsenabschnitt über das Anbindungsstück (3) gestülpt ist, und mit einer Befestigungseinrichtung (15) zum Befestigen des Griffes (8) am Anbindungsstück (3), wobei das Anbindungsstück (3) einen sich in Richtung des Griffes (8) erstreckenden Zapfen (5) mit einer Querbohrung (6) aufweist, dadurch gekennzeichnet dass der Hülsenabschnitt (9) eine gewölbte Querwand (11) aufweist, die mit einer Durchbrechung (14) auf dem Zapfen (5) derart sitzt, dass bei montiertem Griff (8) die Querwand (11) benachbart der Querbohrung (6) liegt, und mit einem Querstift (15), der bei montiertem Griff (8) in der Querbohrung (6) sitzt und in Anlage mit der konkaven Krümmung (12) der gewölbten Querwand (11) ist.

2. Vorrichtung nach Anspruch 1, dadurch gekennzeichnet, dass die Querwand (11) eine konvexe Krümmung (13) aufweist, die bei montiertem Griff (8) dem Pfannenkörper (1) zugewandt liegt.

3. Vorrichtung nach Anspruch 1 oder 2, dadurch gekennzeichnet, dass der Hülsenabschnitt (9) zumindest eine Queröffnung (10) aufweist, durch die der Querstift (15) ins Innere des Hülsenabschnittes (9) und in die Querbohrung (6) des Zapfens (5) einsetzbar ist.

4. Vorrichtung nach einem der Ansprüche 1-3, dadurch gekennzeichnet, dass der Hülsenabschnitt (9) zwei Queröffnungen (10,16) aufweist, wobei eine (16) davon dazu dient, den Querstift (15) vom Innern des Hülsenabschnitts (9) nach aussen zu führen.

5. Vorrichtung nach einem der Ansprüche 1-4, dadurch gekennzeichnet, dass der Hülsenabschnitt (9) eine elliptische Querschnittsfläche aufweist, in der eine elliptische Querwand (11) eingesetzt ist, und das der Wölbungsverlauf der Querwand (11) in der grossen Achse der Ellipse liegt.

6. Vorrichtung nach einem der Ansprüche 1-5, dadurch gekennzeichnet, dass das Anbindungsstück (3) eine quer zu seinem Zapfen (5) liegende Querplatte (4) aufweist, die auf der dem Zapfen (5) abgewandten Seite eine der Mantelfläche (2) des Pfannenkörpers (1) angepasste Wölbung aufweist.

7. Vorrichtung nach einem der Ansprüche 1-6, dadurch gekennzeichnet, dass die Querwand (11) in den Hülsenabschnitt (9) eingeschweisst ist.

8. Vorrichtung nach einem der Ansprüche 1-7, dadurch gekennzeichnet, dass der Querstift (15) als Federstab ausgebildet ist.

9. Verfahren zum Herstellen der Vorrichtung nach Anspruch 1, dadurch gekennzeichnet, dass der Querstift (15) vor dem Montieren des Griffes (8) am Pfannenkörper (1) gerade ist und mit zunehmendem Eintreiben in die Querbohrung (6) des Zapfens (5) durch das Anliegen an der konkaven Krümmung (12) der Querwand (11) zunehmend gekrümmt wird.

## Claims

1. Device for mounting a handle (8) on a pan (1), with a base piece (3) intended to be permanently fixed to the outside (2) of the pan (1), with a socket part (9) of the handle (8), which socket part is engaged onto the base piece (3), and with fixing means (15) fixing the handle (8) on the base piece (3) which comprise a bolt (5) extending towards the handle (8) and having a transversal hole (6), characterized in that the socket part (9) comprises a curved transversal wall (11) engaged onto the bolt (5) by an aperture (14) in such a way that when the handle (8) is mounted the transversal wall (11) lies next to the transversal hole (6), and with a transversal key (15) engaged in the transversal hole (6) and leaning against the concave side (12) of the curved transversal wall (11) when the handle (8) is mounted.

2. Device according to claim 1, characterized in that the transversal wall (11) has a convex curvature (13) which faces the pan (1) when the handle (8) is mounted.

3. Device according to claim 1 or 2, characterized in that the socket part (9) has at least one transversal aperture (10) through which the transversal key (15) can be introduced into the interior of the socket part (9) and through the transversal hole (6) of the bolt (5).

4. Device according to one of claims 1 to 3, characterized in that the socket part (9) has two transversal apertures (10, 16), one of which (16) serves to lead the transversal key (15) from the inside of the socket part (9) towards the exterior.

5. Device according to one of claims 1 to 4, characterized in that the socket part (9) has an elliptic transversal section into which the transversal wall (11) is set, and that the curvature of the transversal wall (11) follows the main axis of the ellipse.

6. Device according to one of claims 1 to 5, characterized in that the base piece (3) comprises a transversal plate (4) oriented transversally to its bolt (5) and which on its side facing away from the bolt (5) exhibits a curvature mating that of the outside (2) of the pan (1).

7. Device according to one of claims 1 to 6, characterized in that the transversal wall (11) is welded inside the socket part (9).

8. Device according to one of claims 1 to 7, characterized in that the transversal key (15) consists of an elastic rod acting as a spring.

9. Method for manufacturing the device according to claim 1, characterized in that the transversal key (15) is straight before the handle (8) is mounted on the pan (1), and that it becomes progressively more curved through its contact with the concave side (12) of the transversal wall (11) when progressively pushed into the transversal hole (6) of the bolt (5).

## Revendications

1. Dispositif pour fixer une poignée (8) sur une casserole (1), avec une pièce de montage (3) destinée à être fixée de façon inamovible à la surface extérieure (2) de la casserole (1), une partie de la poignée (8) formant une douille (9) engagée sur la pièce de montage (3), et avec une fixation (15) pour maintenir la poignée (8) sur la pièce de montage (3), celle-ci comportant un tenon (5) qui s'étend en direction de la poignée (8) et comporte un trou transversal (6), caractérisé en ce que la douille (9) comprend une paroi transversale courbe (11) engagée par un passage (14) sur le tenon (5), de façon à ce que lorsque la poignée (8) est montée la paroi transversale (11) avoisine le trou transversal (6), et en ce que le dispositif comprend une broche transversale (15) engagée dans le trou transversal (6) lorsque la poignée (8) est montée et s'appuyant contre le côté concave (12) de la paroi transversale courbe (11).

2. Dispositif selon la revendication 1, caractérisé en ce que la paroi transversale (11) présente une courbure convexe (13) tournée vers la casserole (1) lorsque la poignée (8) est montée.

3. Dispositif selon la revendication 1 ou 2, caractérisé en ce que la partie formant douille (9) comporte au moins une ouverture transversale (10) à travers laquelle la broche transversale (15) peut être introduite à l'intérieur de la partie formant douille (9) et à travers le trou transversal (6) du tenon (5).

4. Dispositif selon une des revendications 1 à 3, caractérisé en ce que la partie formant douille (9) comporte deux ouvertures transversales (10, 16) dont l'une (16) sert à amener la broche transversale (15) de l'intérieur de la partie formant douille (9) vers l'extérieur.

5. Dispositif selon une des revendications 1 à 4, caractérisé en ce que la partie formant douille (9) présente une section transversale elliptique dans laquelle est insérée une paroi transversale elliptique (11), dont la courbure suit le grand axe de l'ellipse.

6. Dispositif selon une des revendications 1 à 5, caractérisé en ce que la pièce de montage (3) comporte une plaque transversale (4) disposée transversalement à son tenon (5) et présente sur son côté opposé à celui-ci une courbure adaptée à la surface extérieure (2) de la casserole (1).

7. Dispositif selon une des revendications 1 à 6, caractérisé en ce que la paroi transversale (11) est soudée à l'intérieur de la partie formant douille (9).

8. Dispositif selon une des revendications 1 à 7, caractérisé en ce que la broche transversale (15) est une baguette formant un ressort élastique.

9. Procédé pour réaliser le dispositif selon la revendication 1, caractérisé en ce qu'avant le montage de la poignée (8) sur la casserole (1) la broche transversale (15) est rectiligne et qu'on la courbe progressivement par contact avec le côté concave (12) de la paroi transversale (11) lors de son introduction dans le trou transversal (6) du tenon (5).
